Europäisches Patentamt

European Patent Office

Office européen des brevets

(11) Veröffentlichungsnummer: **0 431 330 A2**

# (12) EUROPÄISCHE PATENTANMELDUNG

(21) Anmeldenummer: 90121232.4

(22) Anmeldetag: 06.11.90

(51) Int. Cl.⁵: **E06B 9/78**

(30) Priorität: 06.11.89 DE 3936912

(43) Veröffentlichungstag der Anmeldung:
**12.06.91 Patentblatt 91/24**

(84) Benannte Vertragsstaaten:
**AT BE CH DE DK ES FR GB GR IT LI LU NL SE**

(71) Anmelder: **HÖRMANN KG BIELEFELD**
**Bleichstrasse 67**
**W-4800 Bielefeld 1(DE)**

(72) Erfinder: **Hörmann, Stephan, Dipl.-Phys.**
**Hedwigstrasse 11**
**W-4830 Gütersloh(DE)**

(74) Vertreter: **Flügel, Otto, Dipl.-Ing.**
**Wissmannstrasse 14, Postfach 81 05 06**
**W-8000 München 81(DE)**

(54) **Handbetätigte Antriebseinrichtung für eine Welle.**

(57) Handbetätigte Antriebseinrichtung für eine Welle, insbesondere eine Antriebswelle eines über Kopf bewegbaren Torblattes, die eine mit der Welle verdrehfest verbundene oder an diese ankuppelbare Rolle mit einer umlaufenden Rille aufweist in die ein die Rolle um einen überwiegenden Teilbereich ihres Umfangs umgreifender endlos ausgebildeter flexibler Strang für den Angriff einer ziehenden Hand vorgesehen ist, welcher Strang bei kostengünstiger und einfacher Herstellung für eine angenehme und gefahrlose Handbetätigung zumindest in seinem Mantelbereich aus einem entsprechend weichen, biegsamen Kunststoff besteht.

EP 0 431 330 A2

## HANDBETÄTIGTE ANTRIEBSEINRICHTUNG FÜR EINE WELLE

Die Erfindung betrifft eine handbetätigte Antriebseinrichtung für eine Welle mit den Merkmalen des Oberbegriffes des Anspruches 1.

Bekannte Antriebseinrichtungen dieser Art sind vor allem Haspelantriebe, wie sie für Laufkatzen, insbesondere aber auch für den Antrieb von Torblättern großer Industrietore, Verwendung finden. Im letzteren Falle kann es sich insbesondere um einen sogenannten Nothandantrieb handeln, einen solchen also, der bei Ausfall des ansonsten vorgesehenen elektromotorischen Antriebes eingesetzt werden muß und der in solchen Fällen über eine Kupplung auf die motorgetriebene Welle zur Bewegung des insbesondere über Kopf geführten Torblattes arbeitet.

Bekannte Haspelantriebe arbeiten als Zugglied, an dem die betätigenden Hände angreifen, mit einer zu einer endlosen Schlaufe zusammengefügten Kette, die um eine Rolle geführt ist. Die Rolle befindet sich dabei regelmäßig an einer anzutreibenden Welle bzw. einer solchen zugeordnet, die mehr oder weniger weit oberhalb der betätigenden Person angeordnet ist, so daß die Kette von der Rolle in zwei entsprechend langen Trumen nach unten hin abstrebend verläuft. Eine solche metallene Rolle ist aufgrund des geringen Reibwertes zwischen der Kette und dem Rollenmaterial derart profiliert ausgebildet, daß die Kette ihrer Kontur entsprechend insoweit formschlüssig in die Rolle eingreift. Aufgrund des beweglichen Eingriffes zwischen den Kettengliedern ist eine solche Kette besonders flexibel und neigt vor allem bei heftiger Betätigung, wie sie aufgrund des großen Übersetzungsverhältnisses zwischen der Kettenbewegung und der Bewegung eines schweren Torblattes erforderlich ist, zu entsprechend starken seitlichen Ausschlägen, was die Betätigung der Kette behindern und die betätigenden Hände gefährden kann. Darüber hinaus verursacht eine solche Haspelkette im Betrieb verhältnismäßig viel Lärm. Die in sich glatten Kettenglieder verlangen einen entsprechend festen Zugriff, was unangenehm und insbesondere bei tiefen Temperaturen das Tragen von Handschuhen verlangen kann.

Der Erfindung liegt die Aufgabe zugrunde, eine Antriebseinrichtung der eingangs genannten Art zu schaffen, die bei kostengünstiger und einfacher Herstellung ein angenehmeres und gefahrloseres Betriebsverhalten aufweist.

Ausgehend von einer handbetätigten Wellen-Antriebseinrichtung mit den Merkmalen des Oberbegriffes des Anspruches 1 wird diese Aufgabe erfindungsgemäß durch dessen kennzeichnende Merkmale gelöst.

Erfindungsgemäß ist das Zugmittel der Antriebseinrichtung als zumindest in seinem Mantelbereich aus einem entsprechend weichen, biegsamen Kunststoff bestehender Strang ausgebildet. Da der Strang an die Stelle einer herkömmlichen Endlos-Kette oder eines vergleichbaren Zugmittels für den Angriff der betätigenden Hand tritt, ist seine Flexibilität bzw. Biegsamkeit entsprechend derart beschaffen, daß die Umschlingung der zugeordneten Rolle keine größeren Biegewiderstände verursacht und dem beabsichtigten Herabhängen für den Angriff der betätigenden Hände in im wesentlichen geradlinigen Längstrumen nicht oder doch zumindest nicht störend entgegensteht. Dabei ist zu berücksichtigen, daß in besonders bevorzugter Ausführung der Rolle Stützräder zugeordnet sind, die an den An- bzw. Ablaufbereichen des Stranges an der Rolle an dem Strang diesen gegen die Rolle hin druckbeaufschlagend derart angreifen, daß ein für die Kraftübertragung vom Strang auf die Rolle erforderlicher Umschlingungswinkel entsteht, der vorzugsweise deutlich größer als 180° ist und insbesondere etwa 270° beträgt. Aufgrund dieses Stützrollenangriffes wird der Strang derart geführt, daß er in zwei etwa parallelen Längstrumen von der Rolle abstrebend nach unten hängt.

Der im Mantelbereich an dessen Oberfläche zutage tretende weiche Kunststoff ist stumpf, so daß zum einen ein hoher Reibungskoeffizient zwischen dem Strang und der Rille der Seilrolle auftritt und zum anderen der Angriff der betätigenden Hand ohne festes Zudrücken rutschfest erfolgt. Darüber hinaus ist der Kunststoff als schlechter Wärmeleiter auch bei niedrigen Temperaturen nicht störend anzufassen.

Grundsätzlich kann die Mantelfläche des Stranges strukturiert sein, in bevorzugter Ausführung ist dies aber nicht der Fall. Aufgrund der Kunststoffeigenschaften ergibt sich ein rutschfester Angriff auch ohne eine Oberflächenformgebung, die von einer glatten Zylindermantelform abweicht. In besonders bevorzugter Ausführung ist daher der Strang mit einer kreiszylindermantelförmigen Unstrukturierten Oberfläche versehen, was dessen Herstellung als Extruderteil oder dergleichen entsprechend verbilligt.

Ein Kunststoff für den Strang, der hier in Frage kommt, ist ein Weich-Polyvinylchlorid.

Der Strang kann grundsätzlich als eine Art Schlauch ausgebildet sein, d.h. einen Hohlraum umschließen. In bevorzugter Ausführung ist der Strang jedoch durchgehend hohlraumfrei ausgebildet, was den Herstellungsvoraussetzungen ebenfalls zugute kommt.

Der für den Strang verwendete Kunststoff kann aufgrund der von ihm verlangten Flexibilität zumindest dann, wenn er nicht aufgrund einer besonderen, räumlichen Molekülstrukturierung in bevorzugter Richtung belastbar, sondern homogen ausgebildet ist, unter den aufzubringenden Zugbelastungen möglicherweise störend nachgiebig reagieren. Für diesen Fall ist in bevorzugter Ausführung vorgesehen, in den weichen biegsamen Kunststoff eine in Strangrichtung verlaufende, unter den aufzunehmenden Zugkräften praktisch unnachgiebige Verstärkungseinlage einzusetzen. Dabei kann es sich - insbesondere bei schlauchförmiger Ausbildung des Stranges - um eine Metalldraht-und/oder Kunststoffeinlage höherer Zugbelastung handeln, dievorzugsweise innerhalb der weichen Kunststoffmasse oder aber an deren Innenmantelfläche vorgesehen ist. Bei hohlraumfreier Strangausbildung, also im Querschnitt durchgehend, wird die Verstärkungseinlage in bevorzugter Ausführung als Seele des Stranges ausgebildet, und zwar bevorzugt in Form eines Stahlseiles bzw. einer in Längsrichtung des Stranges verlaufenden Ader aus einem Kunststoff entsprechend höherer Zugbelastbarkeit. Selbstverständlich kann auch bei hohlraumfreier Ausbildung des Stranges eine mehradrige und/oder netzförmgie Verstärkungseinlage in die Weich-Kunststoffmasse eingebettet sein. Solche Verstärkungseinlagen lassen sich im Zuge der Herstellung des Stranges mit einbauen.

Ein im Zuge der Herstellung, beispielsweise Extrudieren, anfallender länglicher Strangabschnitt wird hinsichtlich seiner beiden Enden derart zu einer Schlaufe verbunden, daß die Mantelfläche an der Verbindungsstelle möglichst keine Einbuchtung und/oder Erhöhung aufweist. Dies gelingt bei den hier bevorzugt verwendeten Kunststoffen durch einfaches Stumpfverschweißen der Enden; sofern dabei ein Grad anfällt, läßt sich dieser durch einfache Schneid- oder Reibbearbeitung entfernen. Soweit der Strang mit einer Verstärkungseinlage versehen ist, wird diese je nach Materialeigenschaft ebenfalls verschweißt, verklemmt oder verknüpft, so daß die Zugbelastbarkeit an der Verbindungsstelle nicht beeinträchtigt ist.

Der erfindungsgemäß ausgebildete läßt sich auch in seinen bevorzugten Varianten zusammen mit einer Rolle einsetzen, wie sie für andere, bekannte Zugmittel, insbesondere auch eine Haspelkette, Verwendung gefunden hat. In bevorzugter Ausführung ist die Rille der Rolle jedoch in Umfangsrichtung glatt durchgehend ausgebildet. Dies gilt für den Fall einer strukturierten Oberfläche des Stranges und insbesondere auch bei dessen Ausbildung mit glatt durchgehender Mantelfläche, weil die Stumpfheit der Fläche des Kunststoffstranges im Zusammenwirken mit der in Umfangsrichtung fluchtend durchgängigen Ausbildung der Rillenwandung einen ausreichend hohen Reibkoeffizienten aufweist, um unter der auftretenden Kraftübertragungsbelastung einen zumindest annähernd schlupffreien Eingriff zwischen Strang und Rolle zu gewährleisten.

Eine solche Rolle kann aus Gußmaterial, auch aus Kunststoff bestehen, in bevorzugter Ausführung läßt sie sich aus zwei Schalen herstellen, die je eine Hälfte der in ihrer axialen Symmetrieebene geteilten Rolle bilden, zu dieser Ebene spiegelsymmetrisch angeordnet und mit ihren radial inneren Flächen aneinanderliegend miteinander verbunden sind, wobei die radial äußeren, axial voneinander beabstandeten Randbereiche der Schalen die Seitenwandungen der Rille bilden und die aneinanderliegenden radial inneren Flächen in Radialrichtung nach außen gesehen in dem Rillengrund der Rolle auslaufen. Grundsätzlich weist die Rille in bevorzugter Ausführung sich radial nach außen hin V-förmig öffnende Seitenwandungen auf, die je in einem Randbereich auslaufen, deren radial äußere Umfangskanten den zwischen Ihnen aufgenommenen Strang radial nach außen gesehen überragen. Auf diese Weise wird eine gute Reibanlage erzielt und darüber hinaus sichergestellt, daß der Strang auch bei heftiger Zugbeanspruchung und damit möglicherweise auftretenden Schwingungserscheinungen nicht außer Eingriff mit der Rille der Rolle gelangt.

Man kann den Kunststoffstrang stumpf schweißen, vor allen Dingen dann, wenn eine Verstärkungseinlage in Form einer Seele, also als Draht oder Kunststoffseil beispielsweise nicht vorgesehen ist. Ein solches Verschweißen der vollen Querschnittsflächen bei radialem Abschnitt der Strangenden mag auch angängig sein, wenn eine Verstärkungseinlage in Form eines Gewebes vorgesehen ist, die von dem weichen Kunststoff des Stranges durchdrungen wird, wobei vorausgesetzt ist, daß das Strangmaterial selbst die auftretenden Zugkräfte aufnehmen kann und die Verstärkungseinlage lediglich eine unangenehme Längenänderung des Stranges unter Zugbelastung verhindern soll. Allerdings ist eine solche mit voller Querschnittsfläche aneinanderstoßende Stumpfverschweißung hinsichtlich des Krümmungsverhaltens des Stranges nachteilig, was sich im Stangablauf entlang der Rolle 2 und insbesondere der Umlenkräder 8 und 9 störend bemerkbar machen kann. In besonders bevorzugter Ausführung der Erfindung wird daher die Verbindungsstelle zwischen den Enden de s zu einem Endlosstrang zusammenzuschließenden Stranges derart gestuft ausgeführt, daß die Verschweißung nicht ausschließlich in radialer Ebene, sondern vornehmlich in einer Ebene oder Fläche erfolgt, die in der Längsachse des Stranges liegt. In bevorzugter Ausfflrung werden daher die Enden abgestuft ausgebildet, vorzugsweise derart, daß eine erste Stufenfläche in etwa radialer Ebene zur Stranglängsachse und eine zweite Stufenfläche sich daran anschließend durch die Längsachse des Stranges verlaufend vorgesehen wird. Dies hat darüber hinaus den besonderen Vorteil, daß der mit einer Seele vorgefertigt bzw. gleichzeitig extrudierte Strang als "Meterware" behandelt werden kann und daß bei Herstellung der vorgeschilderten Abstufung im Bereich der Abstufungsfläche, die durch die Längsachse des Stranges verläuft, das entsprechende Ende der Seele frei wird, so daß beide derartig frei werdenden Enden der Verstärkungseinlage für eine Verbindung miteinander zugänglich sind. Eine solche Verbindung kann durch Verschweißen oder aber auch durch Verklemmen stattfinden, wobei das weiche Strangmaterial um den für das Verklemmen erforderlichen Überlappungsbereich der Enden der seelenförmigen Verstärkungseinlage im Sinne einer Stauchung zusammengedrückt wird.

Diese und weitere bevorzugte Ausführungen der Erfindung ergeben sich aus den Unteransprüchen, insbesondere im Zusammenhang mit dem in der Zeichnung wiedergegebenen Ausführungsbeispiel, auf das besonders Bezug genommen wird und dessen nachstehende Beschreibung die Erfindung näher erläutert. Es zeigen

Figur 1 eine Seitenansicht auf einen Teilbereich des Ausführungsbeispieles;

Figur 2 eine um 90° gedrehte Seitenansicht des Ausführungsbeispieles gemäß Figur 1;

Figur 3 eine Teilschnittdarstellung nach den Pfeilen III/III in Figur 1.

Figur 4 einen Längsschnitt durch die beiden miteinander zu verbindenden Endbereiche eines Stranges zu einem Endlosstrang;

Figur 5 eine perspektivische Ansicht der zu verbindenden Endbereiche des Stranges sowie eines zweigeteilten Werkzeuges für das Verschweißen der Strangenden in vorbereitender Ausgangsstellung;

Figur 6 das Werkzeug gemäß Figur 5 in der Betriebsstellung.

Das Ausführungsbeispiel weist eine insgesamt mit 1 bezeichnete Halterung auf, die an einer Dekke befestigt ist und im wesentlichen zwei parallele Wangen aufweist, zwischen denen die Rolle 2 derart angeordnet ist, daß die Rollenachse 3 senkrecht zu den Wangen steht und in in dieser Richtung fluchtenden Öffnungen der Wangen gehalten ist. Die Rollenachse 3 kann mit der Rolle 2 einstückig ausgebildet sein und eine Lagerung in den Öffnungen der Halterung 1 aufweisen, es ist auch möglich, die Rollenachse 3 an der Halterung festzulegen und die Rolle 2 über ein nicht dargestelltes Lager gegenüber der Rollenachse 3 drehbar zu halten.

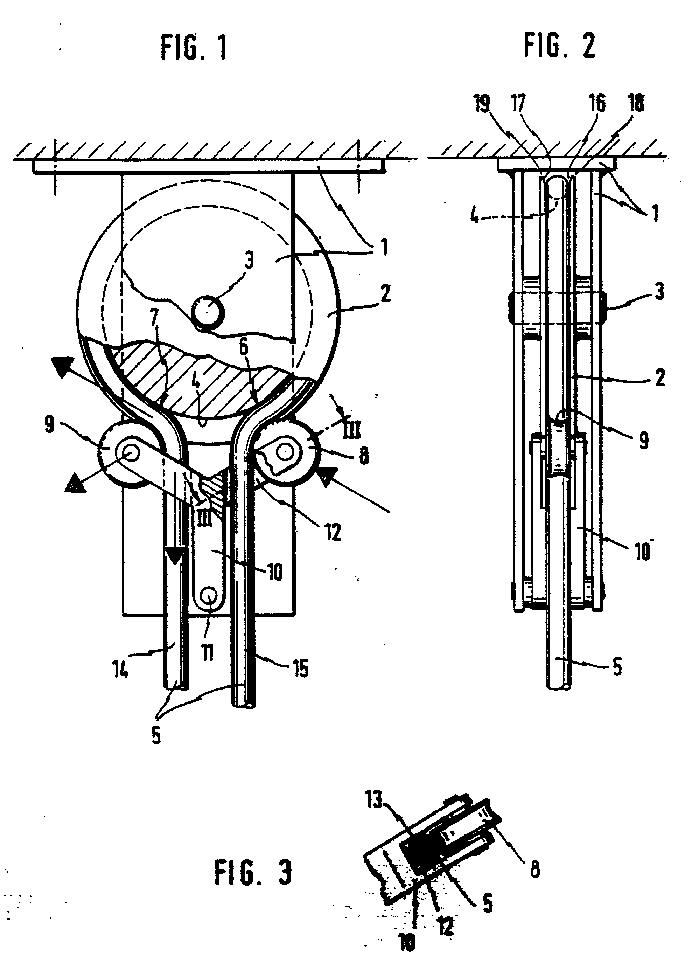

Die Rolle 2 ist mit einer sich über ihren Umfang hinweg durchgehend mit gleichbleibender Kontur erstreckenden Rille 4 versehen, in die ein Strang 5 aus einem entsprechend biegsamen, weichen Kunststoff eingelegt ist. Der Strang 5 weist einen Auflaufbereich 6 auf die Rolle 2 und einen Ablaufbereich 7 von der Rolle 2 auf, wenn man die in Figur 1 angedeutete Zugkraft voraussetzt; ansonsten kehren sich die Begriffsinhalte um. Den beiden Bereichen 6 und 7 sind Umlenkräder 8 und 9 zugeordnet, die an einer Gabel 10 gehalten sind, welche um eine Achse 11 verschwenkbar ist. Die Achse 11 erstreckt sich wie die Rollenachse 3 parallel zu dieser senkrecht zu den Wangen der Halterung 1 und ist in diesen drehbar gelagert bzw. festgelegt, in welch letzterem Falle die Gabel 10 um die Achse 11 verschwenkbar gelagert ist. Die Gabel 10 sowie die an ihr gehaltenen Umlenkräder 8 und 9, die um zur Achse 11 und zur Rollenachse 3 parallel verlaufende Achsen drehbar gelagert sind, befinden sich wie auch der Abschnitt des Stranges 5, der an der Rolle und den Rädern gehalten ist, zwischen den Wangen der Halterung 1.

Wie die Figuren 1 und 3 erkennen lassen, ist zwischen jeweils einem der Umlenkräder 8 und 9 und dem um die Achse 11 verschwenkbar gelagerten zentralen Teil der Gabel 10 jeweils eine Öffnung 12 freigelassen, durch welche der Strang 5 geführt ist. Die Umlenkräder 8 und 9 laufen in derselben Ebene wie die Rolle 2 um und sind zu dieser derart radial entfernt angeordnet, daß jeweils zwischen eines der Umlenkräder 8 und 9 und der Rolle 2 der Strang 5 aufgenommen ist, wie dies Figur 1 erkennen läßt. Auf diese Weise definieren die Umlenkrollen 8 und 9 den Auflaufbereich 6 des Stranges 5 auf die Rolle 2 und den Ablaufbereich des Stranges 5 von der Rolle 2 bei der hier vorausgesetzten Bewegungsrichtung derart, daß der Strang 5 die Rolle 2 zwischen den Umlenkrädern 8 und 9 in einem Winkel von mehr als 270° umschlingt.

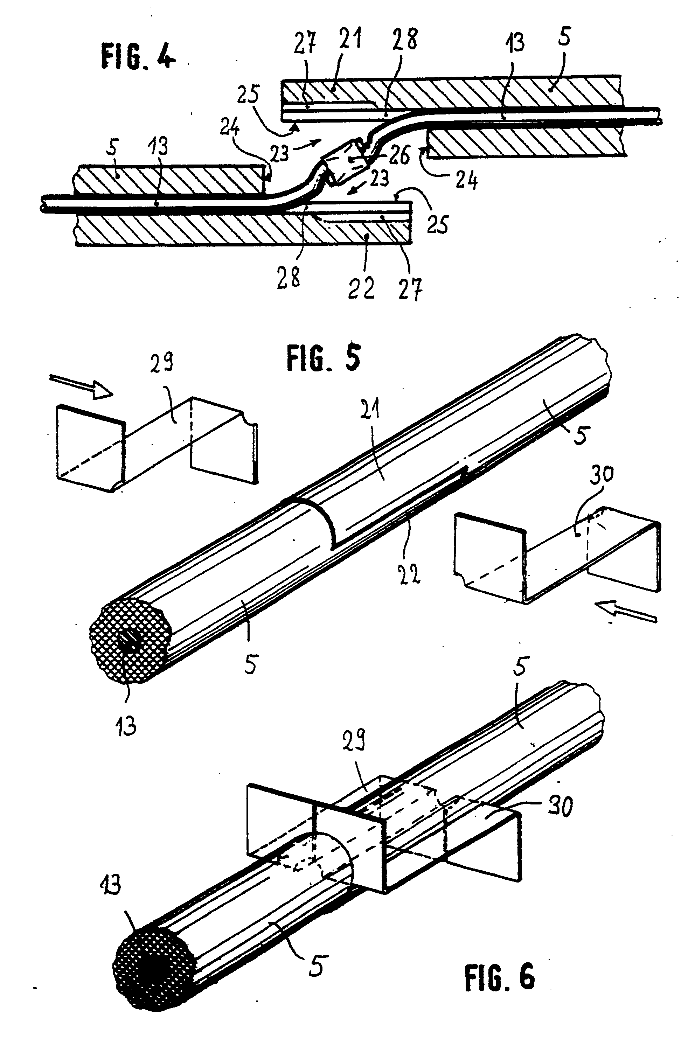

In den Figuren 4 bis 6 ist dargestellt, wie im Rahmen des Ausführungsbeispieles die Verbindung zwischen den Enden eines Stranges zur Herstellung des erforderlichen Endlosstranges vorgegangen wird. Beide Strangenden werden in Endbereichen 21 und 22 derart ausgeführt, daß die Endbereiche nur noch eine geometrische Hälfte des Querschnittes des Stranges 5 aufweisen; bei einem kreisrunden Strangquerschnitt zeigen die Endbereiche demnach einen halbkreisförmigen Querschnitt gleichen Radius. Wie Figur 1 erkennen läßt, sind diese Abstufungen 21 und 22 jeweils durch Abstufungen 23 gebildet, deren Übergang zwischen Endbereich und Strang eine in radialer Ebene verlaufende Abstufungsfläche 24 aufweisen, an die sich eine rechtwinklig daran anschließende, durch die Längsmitte des Stranges 13 verlaufende ebene Fläche 25 anschließt. In den Abstufungsflächen 25 sind jeweils rillenförmige Ausnehmungen 28 für die Aufnahme der seelenförmigen Verstärkungseinlage 13 vorgesehen. Die Enden der Verstärkungseinlage, die durch die Abstufungen freigelegt werden, sind mit Hilfe einer Klammer 26 miteinander zugfest verbunden. Zur Aufnahme des Verbindungsbereiches sind in den Endbereichen über einen Teil der rinnenförmigen Ausnehmungen 28 hinweg geführt Aushöhlungen 27 vorgesehen, die dann erforderlich sind, wenn die Verbindungsstelle zwischen den Enden der Verstärkungeinlage entsprechend großvolumig ist und/oder das Strangmaterial nicht nachgiebig genug ist, um die Verbindungsstelle ohne eine solche gesonderte Aushöhlung aufnehmen zu können.

In den Figuren 5 und 6 ist die Verbindungsstelle zwischen den Strangenden sowie ein Werkzeug wiedergegeben, das zur Aufheizung der Abstufungsflächen 24 und 25 dient und in einer durch die Längsachse des Stranges im Verbindungsbereich verlaufenden Symmetrieebene zweigeteilt ist. Das Werkzeug, das aufheizbar ist, weist im Betriebszustand - Figur 3 - Flächen auf, die die Abstufungsflächen 24 und 25 übergreifen und damit bis zur Schmelzflüssigkeit aufheizen können. Im schmelzflüssigen Zustand wird das Werkzeug durch seitliches Auseinanderziehen - Figur 2 - entfernt und die Abstufungsflächen beider Endbereiche werden zur Strangform zusammengefügt und verbinden sich homogen miteinander, so daß eine annähernd der Flexibilität des übrigen Stranges verformbare Verbindungsstelle geschaffen ist.

**Ansprüche**

1. Handbetätigte Antriebseinrichtung für eine Welle, insbesondere eine Antriebswelle eines über Kopf bewegbaren Torblattes, die eine mit der Welle verdrehfest verbundene oder an diese ankuppelbare Rolle (2) mit einer umlaufenden Rille (4) aufweist, in die ein die Rolle (2) um einen überwiegenden Teilbereich ihres Umfanges umgreifender, endlos ausgebildeter, flexibler Strang (5) eingelegt ist, an dessen in Antriebsdrehrichtung von der Rolle (2) ablaufendem Trum (14) die betätigende Hand ziehend angreift, welche Zugkraft über den Eingriff zwischen dem Strang (5) und der Rolle (2) in deren Drehbewegung umgesetzt wird,
**dadurch gekennzeichnet,**
daß der Strang (5) zumindest in seinem Mantelbereich aus einem entsprechend weichen, biegsamen Kunststoff besteht.

2. Einrichtung nach Anspruch 1,
**dadurch gekennzeichnet,**
daß der Strang (5) eine kreiszylindermantelförmige, umstrukturierte Oberfläche aufweist.

3. Einrichtung nach Anspruch 1 oder 2,
**dadurch gekennzeichnet,**
daß der Kunststoff ein Weich-Polyvinylchlorid ist.

4. Einrichtung nach einem der Ansprüche 1 bis 3,
**dadurch gekennzeichnet,**
daß der Strang (5) durchgehend hohlraumfrei ausgebildet ist.

5. Einrichtung nach einem der Ansprüche 1 bis 4,
**dadurch gekennzeichnet,**
daß in den weichen biegsamen Kunststoff eine in Strangrichtung verlaufende, unter den aufzunehmenden Zugkräften praktisch unnachgiebige Verstärkungseinlage (13) eingebettet ist.

6. Einrichtung nach Anspruch 5,
**dadurch gekennzeichnet,**
daß die Verstärkungseinlage als Gewebe, insbesondere in Form eines Schlauches, ausgebildet ist.

7. Einrichtung nach Anspruch 5,
**dadurch gekennzeichnet,**
daß die Verstärkungseinlage (13) als Seele des Stranges (5) ausgebildet ist.

8. Einrichtung nach einem der Ansprüche 5 bis 7,
**dadurch gekennzeichnet,**
daß die Verstärkungseinlage aus Stahldrähten oder zugfesten Kunststofffäden, im Falle der Ausbildung als Seele insbesondere als Stahldrahtseil (13) oder Ader aus zugfestem Kunststoff, gebildet ist.

9. Einrichtung nach einem der Ansprüche 1 bis 8,
**dadurch gekennzeichnet,**
daß der Strang (5) durch Verschweißen des Kunststoffes der beiden Enden eines länglichen Strangwerkstoffabschnittes zu einer endlosen Schlaufe zusammengefügt ausgebildet ist, deren eventuelle Verstärkungseinlage (13), insbesondere durch Verschweißen, ebenfalls in Schlaufenform zugfest zusammengefügt ist.

10. Einrichtung nach einem der Ansproche 1 bis 9,
**dadurch gekennzeichnet,**
daß die Rille (4) der Rolle (3) in Umfangsrichtung glatt durchgehend ausgebildet ist.

11. Einrichtung nach Anspruch 10,
**dadurch gekennzeichnet,**
daß die Rille (4) mit sich radial nach außen hin V-förmig öffnenden Seitenwandungen (16, 17) ausgebildet ist, die je in einem Randbereich auslaufen, deren radial äußere Umfangskanten (18, 19) den zwischen ihnen aufgenommenen Strang (5) überragen.

12. Einrichtung nach Anspruch 10 oder 11,
**dadurch gekennzeichnet,**
daß die Rolle (2) aus zwei Schalen zusammengesetzt ist, die je eine Hälfte der in ihrer axialen Symmetrieebene geteilten Rolle (2) bilden, zu dieser Ebene spiegelsymmetrisch angeordnet und mit ihren radial inneren Flächen aneinanderliegend miteinander verbunden sind, so daß die radial äußeren, axial voneinander beabstandeten Randbereiche der Schalen die Seitenwandungen (16, 17) bilden und die aneinanderliegenden radial inneren Flächen radial auswärts in dem Rillengrund (20) auslaufen.

13. Einrichtung nach einem der Ansprüche 1 bis 12,

**dadurch gekennzeichnet,**

daß in den Auf- und Ablaufbereichen (6, 7) des Stranges (5) auf die bzw. von der Rolle (2) jeweils ein Umlenkrad (8, 9) vorgesehen ist, die jeweils einen der beiden Auf- und Ablaufbereiche (6, 7) des Stranges (5) auf die Rolle (2) zu gerichtet abstützen und vorzugsweise einen Umschlingungswinkel des Stranges (5) um die Rolle (2) größer 180°, insbesondere größer 270°, sicherstellen.

14. Einrichtung nach Anspruch 13,

**dadurch gekennzeichnet,**

daß die beiden Umlenkräder (8, 9) an einer Gabel (10) gelagert sind, die um eine koaxial zur oder in festem Abstand von der Rollenachse (3) parallel zu dieser verlaufende Achse (11) verschwenkbar gelagert ist.

15. Einrichtung nach Anspruch 8,

**dadurch gekennzeichnet,**

daß die als Seele aus einem Kunststoffseil oder einem Kunststoffaden oder dergleichen gebildete Verstärkungseinlage mit dem Strangmaterial in einem Extrodiervorgang vereinigt ist.

16. Einrichtung nach einem der Ansprüche 7 bis 15,

**dadurch gekennzeichnet,**

daß die zusammenzufügenden Endbereiche (21, 22) des Stranges (5) jeweils eine Abstufung (23) dergestalt aufweisen, daß der Querschnitt des Endbereiches (21 bzw. 22) eine geometrische Hälfte des Strangquerschnittes umfaßt, so daß die zusammengefügten beiden Endbereiche (21, 22) einander überlappend den vollen Strangquerschnitt ergeben.

17. Einrichtung nach Anspruch 16,

**dadurch gekennzeichnet,**

daß die Abstufungen (23) rechtwinklig derart ausgeführt sind, daß der Übergang zwischen dem Strangquerschnitt und dem Endbereichquerschnitt in einer radialen Ebene (24) und die sich daran anschließende Begrenzungsebene (25) des Endbereiches (21 bzw. 22) außerhalb der Strangoberfläche in der Stranglängsachse verläuft.

18. Einrichtung nach Anspruch 16 oder 17,

**dadurch gekennzeichnet,**

daß die Enden der als Seele ausgebildeten Verstärkungseinlage -insbesondere Stahl- oder Kunststoffseil oder dergleichen (13) - in der Überlappungszone der Endbereiche (21, 22) miteinander verbunden sind, insbesondere durch Verschweißen oder mit Hilfe einer Klammer (26) verpreßt.

19. Einrichtung nach einem der Ansprüche 16 bis 18,

**dadurch gekennzeichnet,**

daß die Endbereiche (21, 22) in der Überlappungszone eine vergrößerte Aushöhlung (27) zwischen den in Strangmitte verlaufenden rinnenförmigen Ausnehmungen (28) für die Aufnahme der seelenförmigen Verstärkungseinlage (13) aufweisen, in welche Aushöhlungen (27) die Verbindungsstelle der Enden der Verstärkungseinlage (13), z.B. Klammer (26), aufgenommen ist.

20. Verfahren zur Verbindung der Enden des Stranges zu einem Endlosstrang nach einem der Ansprüche 16 bis 19,

**dadurch gekennzeichnet,**

daß die Enden des Stranges zur Schaffung einer in Stranglängsrichtung überlappend ausgebildeten Verbindungszone mit Abstufungen versehen werden, worauf die im Bereich der Abstufungen freigelegten Enden der seelenförmigen Verstärkungseinlage miteinander verbunden, insbesondere verklammert, werden, wonach die im Verbindungszustand zur Anlage aneinander gelangenden Abstufungsflächen (24, 25) aufgeheizt und danach zusammengefügt werden, so daß die durch das Aufheizen schmelzflüssigen Oberflächenzonen der Abstufungen sich homogen verbinden.

21. Verfahren nach Anspruch 20,

**dadurch gekennzeichnet,**

daß das Aufheizen mit Hilfe eines entlang einer Symmetrieebene, die im Arbeitszustand durch die Stranglängsmitte verläuft, zweigeteilten, aufheizbaren Werkzeuges vorgenommen wird, das die Abstufungsflächen übergreifende Heizflächen aufweist.

FIG. 1

FIG. 2

FIG. 3

**FIG. 4**

**FIG. 5**

**FIG. 6**